# EUROPÄISCHE PATENTANMELDUNG

(11) **EP 0 869 349 A2**
(43) Veröffentlichungstag der Anmeldung: **07.10.1998**
(21) Anmeldenummer: 98890078.3
(22) Anmeldetag: 23.03.1998
(51) Int. Cl.: G01N 21/53

(54) **Vorrichtung zur Trübungsmessung**

(30) Priorität: 03.04.1997 AT 202/97
(71) Anmelder: AVL List GmbH, 8020 Graz (AT)
(72) Erfinder: Pauritsch, Martin, 8051 Gösting (AT); Purkathofer, Ferdinand, 8047 Hart b. Graz (AT); Wegerer, Michael, Dipl.-Ing. Dr., 8044 Graz (AT)
(74) Vertreter: Pinter, Rudolf, Dipl.-Ing.

(57) **Zusammenfassung**

Bei einer Vorrichtung zur Trübungsmessung an Abgasen sind die Beleuchtungsanordnung (14) und die Sensoranordnung (15) in starrer, festbleibender Relation zur Meßkammer (2) im Gehäuse (1) angeordnet. Die zwischen den austrittsseitigen offenen Enden (10) der Meßkammer (2) und der Beleuchtungsanordnung (14) einerseits sowie der Sensoranordnung (15) andererseits angeordneten Schutzfenster (20) sind zur Reinigung separat aus ihrer im Meßbetrieb gegebenen Position relativ zum Gehäuse (1) entfernbar ausgebildet, womit die gegenseitige Anordnung von Beleuchtungsanordnung (14), Sensoranordnung (15) und Meßkammer (2) im normalen Betrieb der Anordnung für reproduzierbare Messungen nicht nachjustiert bzw. die Vorrichtung entsprechend nicht nachkalibriert werden muß.

## Beschreibung

Die Erfindung betrifft eine Vorrichtung zur Trübungsmessung an partikelbeladenen Gasströmen, insbesonders am Abgas einer Diesel-Brennkraftmaschine, mit einer in einem Gehäuse angeordneten, im wesentlichen rohrförmigen Meßkammer, die in einem Mittenbereich eine einmündende Zuführleitung und im Bereich ihrer offenen Enden einerseits eine Beleuchtungsanordnung und andererseits eine Sensoranordnung aufweist, die mittels Schutzfenstern vor der Anlagerung von Partikeln geschützt sind.

Derartige Vorrichtungen bzw. die damit durchgeführten Meßverfahren arbeiten nach dem Beer-Lambert'schen Gesetz, wonach durch die im Gas bzw. Abgas befindlichen Partikel eine Abschwächung eines Lichtstrahles hervorgerufen wird. Die Größenordnung der Abschwächung wird als Maß für die Partikelbelastung des Gases herangezogen. Im speziellen Fall der angesprochenen Abgasmessung an Brennkraftmaschinen, insbesonders Diesel-Brennkraftmaschinen, wird das Abgas zumeist einfach durch den Staudruck der Brennkraftmaschine über eine ins Auspuffrohr einführbare Sonde mit anschließendem Sondenschlauch in eine Meßkammer geleitet, wobei über ein vorgeordnetes Umschaltventil wahlweise auch Kalibrierluft durch die Meßkammer geführt werden kann.

Um die im Bereich der offenen Enden der Meßkammer angeordnete Beleuchtungsanordnung bzw. Sensoranordnung vor der Anlagerung von Partikeln aus dem Gasstrom zu schützen, sind verschiedenste Maßnahmen bei derartigen Vorrichtungen bekannt geworden. Zumeist wird über Spülluftvorhänge oder an Durchlaßöffnungen für den Beleuchtungsstrahl ausgeblasener Spülluft versucht, das partikelbeladene Abgas nach dem Austritt aus der Meßkammer von Beleuchtungsanordnung und Sensoranordnung fernzuhalten, wobei aber beachtet werden muß, daß diese Spülluft wegen der Gefahr einer Verfälschung der Messung nicht in die Meßkammer selbst gelangen darf und auch das Abströmen aus dieser nicht beeinflussen soll. Weiters sind unmittelbar am Austritt der Beleuchtungsanordnung bzw. am Eintritt der Sensoranordnung entsprechend durchlässige optische Fenster vorgesehen, um eine Verschmutzung des Inneren der genannten Anordnungen mit Sicherheit auszuschließen. Diese Schutzfenster müssen naturgemäß speziell vor der Anlagerung von Partikeln geschützt werden, wozu die erwähnten Spülströme bzw. auch separate Heizungen dienen.

Bei einer bekannten Vorrichtung der eingangs genannten Art ist die Beleuchtungsanordnung und die Sensoranordnung jeweils in einer auf die offenen Enden der Meßkammer aufsteckbaren Einheit untergebracht, die auch separate Spülluftventilatoren aufweist, mit deren Hilfe die Durchtrittsöffnung für den Beleuchtungsstrahl zur Verhinderung eines Eintrittes des partikelbeladenen Gasstromes von Innen her durchblasen wird. Zur fallweise erforderlichen Reinigung der erwähnten Schutzfenster sind diese aufsteckbaren Einheiten insgesamt von der Meßkammer abnehmbar, was im Meßbetrieb allerdings Probleme mit der Reproduzierbarkeit der Meßergebnisse bringt, da die genaue Ausrichtung und Justierung der Beleuchtungsanordnung und der Sensoranordnung relativ zur Meßkammer auf diese Weise nicht gewährleistet werden kann. Es ergibt sich insgesamt ein hinsichtlich der optischen Justierung relativ heikler Aufbau, der einer einfachen Handhabung der Vorrichtung beispielsweise im rauhen Werkstattbetrieb entgegensteht bzw. relativ häufige Nachjustierungen oder Kalibrierungen erfordert.

Weiters ist beispielsweise aus der EP 0 586 363 A1 eine Vorrichtung der eingangs genannten Art bekannt geworden, bei der Beleuchtungsanordnung und Sensoranordnung in am Grundgehäuse der Vorrichtung, welches die Meßkammer trägt, seitlich wegklappbar befestigten Gehäuseteilen angeordnet sind. Damit ist eine teilweise Verbesserung der oben angesprochenen Nachteile erreicht, da diese wegklappbaren Gehäuseteile bei der Reinigung der Schutzfenster an ihrer Gelenkachse stets mit dem Grundgehäuse verbunden bleiben. Trotzdem kann es auch bei dieser Vorrichtung unter gewissen Umständen zu einer Änderung der gegenseitigen Justierung von Beleuchtungsanordnung, Meßkammer und Sensoranordnung kommen, deren Vermeidung wiederum erhöhte Sorgfalt im Meßbetrieb erfordert bzw. die letztendlich wiederum zur Notwendigkeit öfteren Nachjustierens bzw. Kalibrierens führt.

Aufgabe der vorliegenden Erfindung ist es, eine Vorrichtung der eingangs genannten Art so zu verbessern, daß die angesprochenen Nachteile der bekannten derartigen Vorrichtungen vermieden werden und daß insbesonders auf einfache, robuste und betriebssichere Weise erreicht werden kann, daß die Notwendigkeit der Nachjustierung bzw. Nachkalibrierung nach einer im üblichen Meßbetrieb durchgeführten Reinigung der Schutzfenster möglichst entfällt.

Diese Aufgabe wird gemäß der vorliegenden Erfindung bei einer Vorrichtung der eingangs genannten Art dadurch gelöst, daß Beleuchtungsanordnung und Sensoranordnung in starrer festbleibender Relation im Gehäuse angeordnet sind und daß die Schutzfenster zur Reinigung separat aus ihrer im Meßbetrieb gegebenen Position relativ zum Gehäuse entfernbar ausgebildet sind. Damit bleibt nun die gegenseitige geometrische Ausrichtung von Beleuchtungsanordnung, Meßkammer und Sensoranordnung im normalen Betrieb der Anordnung inklusive während des von Zeit zu Zeit notwendigen Reinigens der Schutzfenster völlig unverändert, sodaß naturgemäß jegliche diesbezügliche Nachjustierungen und Nachkalibrierungen entfallen können. Es ergibt sich ein robuster Aufbau der Vorrichtung, der sich auch im rauhen Werkstattbetrieb hervorragend bewährt, wobei trotzdem eine sehr leichte Reinigung der Schutzfenster möglich ist, die sogar beidseitig problemlos erfolgen kann, ohne daß auf irgendwelche sonstigen empfindlichen Teile geachtet werden müßte, wie dies bei den eingangs beschriebenen Vorrichtungen nach dem Stande der Technik zufolge der dort insgesamt von der Meßkammer abnehmbaren bzw. wegklappbaren Einheiten notwendig ist. So können diese Schutzfenster beispielsweise auch einfach und zweckmäßig durch Einlegen in ein Reinigungsbad, einen Ultraschallreiniger, oder dergleichen gereinigt werden, was bei den bisher bekannten Vorrichtungen nicht oder zumindest nicht ohne beispielsweise im Werkstattbetrieb kaum durchführbare Teilzerlegung der Vorrichtung möglich war.

In weiterer Ausgestaltung der Erfindung ist vorgesehen, daß die Schutzfenster jeweils mit einem Rahmenteil in seitlich am Gehäuse zugreifbare Einschubschlitze abgedichtet und reproduzierbar einrastend eingesteckt sind. Dies ist eine besonders einfache Ausbildung, die darüber hinaus den Vorteil bietet, daß die Schutzfenster selbst von unbeabsichtigten Berührungen, Verkratzungen und dergleichen sehr gut geschützt sind. Weiters ist damit sichergestellt, daß ohne komplizierte Eingriffe an der Vorrichtung die Schutzfenster nach der Reinigung außerhalb der Vorrichtung wieder sicher an ihren Platz in der Vorrichtung zurückkommen und nicht etwa durch unvollständiges Einstecken eine die Messung verfälschende Teilabschattung des Beleuchtungsstrahles bewirken können.

Das Gehäuse der Vorrichtung besteht gemäß einer besonders bevorzugten Ausgestaltung der Erfindung im wesentlichen aus zwei, im Betrieb fest verbundenen Halbschalen, vorzugsweise aus temperatur- und chemikalienbeständigem Kunststoff, wobei die Teilungsebene dieser Halbschalen im wesentlichen in der durch die Achsen von Meßkammer und Zuführleitung aufgespannten Mittelebene liegt, und welche abgesehen von den entfernbaren Schutzfenstern samt deren Rahmenteilen, im normalen Betrieb der Vorrichtung alle Einbauteile fest verbunden aufnehmen. Es ergibt sich damit eine einfache und robuste Ausbildung des Gehäuses, die eine einfache Montage insbesonders der Beleuchtungsanordnung, der Meßkammer und der Sensoranordnung erlaubt, sodaß die Vorrichtung beispielsweise auch im normalen Werkstattbetrieb nie gänzlich zu vermeidende Belastungen durch Stösse, Schläge oder dergleichen ohne Beeinflussung der Meßgeometrie übersteht.

Im letztgenannten Zusammenhang besonders vorteilhaft ist eine weitere Ausbildung der Erfindung, gemäß welcher das Gehäuse seitliche Halteelemente zur Ankoppelung an einen im wesentlichen stabförmigen Träger aufweist, mittels welchem die Vorrichtung samt Standard-Entnahmesonde in im wesentlichen senkrecht nach oben ragende Proben-Entnahmestellen, insbesonders hochgezogene Auspuffrohre von LKW's, einhängbar ist. Dies ist bei der oben angesprochenen erfindungsgemäßen Ausbildung sehr einfach möglich da - wie beschrieben - die gegenseitige geometrische Anordnung von Beleuchtungsanordnung, Meßkammer und Sensoranordnung sehr robust ist, sodaß auch bei der hier beschriebenen Verwendung keine negative Beeinflussung dieser Geometrie durch die beschriebene Ankoppelung an den stabförmigen Träger auftreten kann. Es kann damit in sehr vorteilhafter Weise ohne sonst für derartige Verwendungen notwendige Verlängerungen des Proben-Zuführschlauches ausgekommen werden, was Messungen nahe am Entnahmeort ohne sonst zur Vermeidung von Kondensation erforderlicher Beheizung des Probenschlauches ermöglicht.

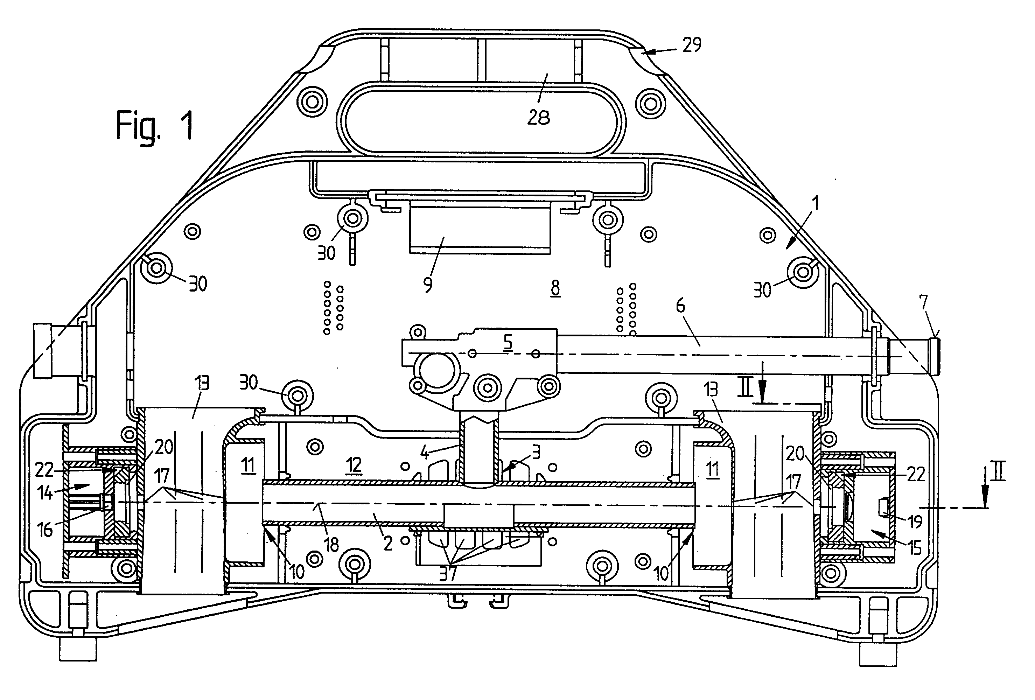

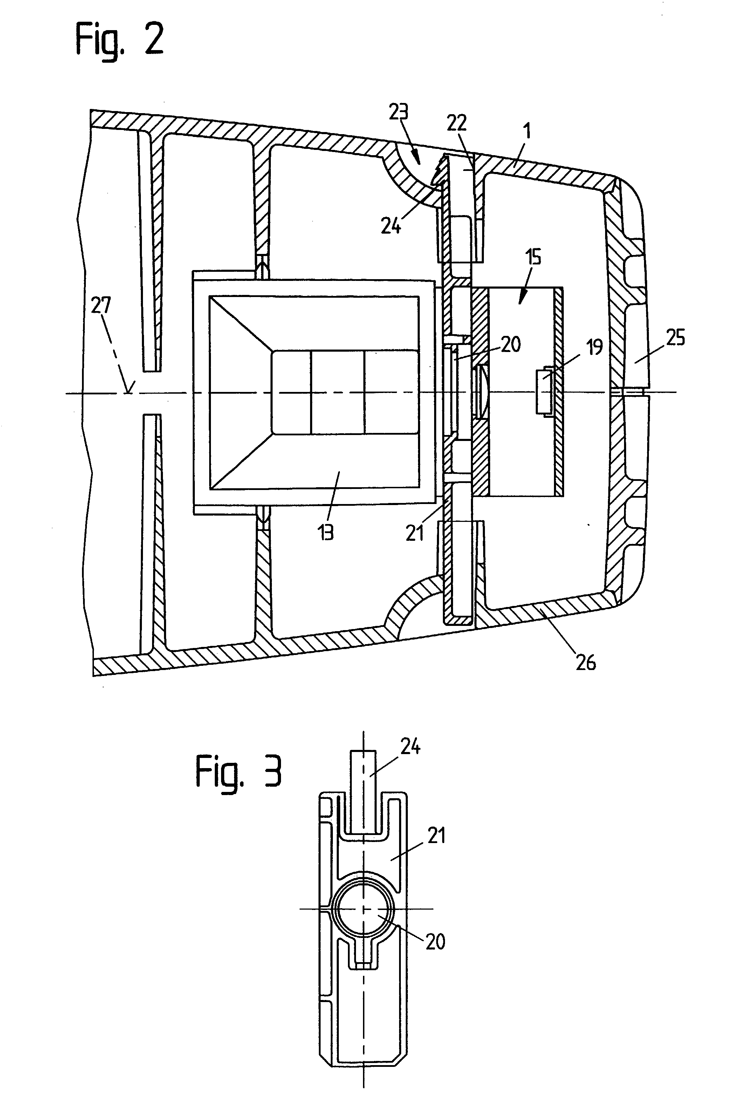

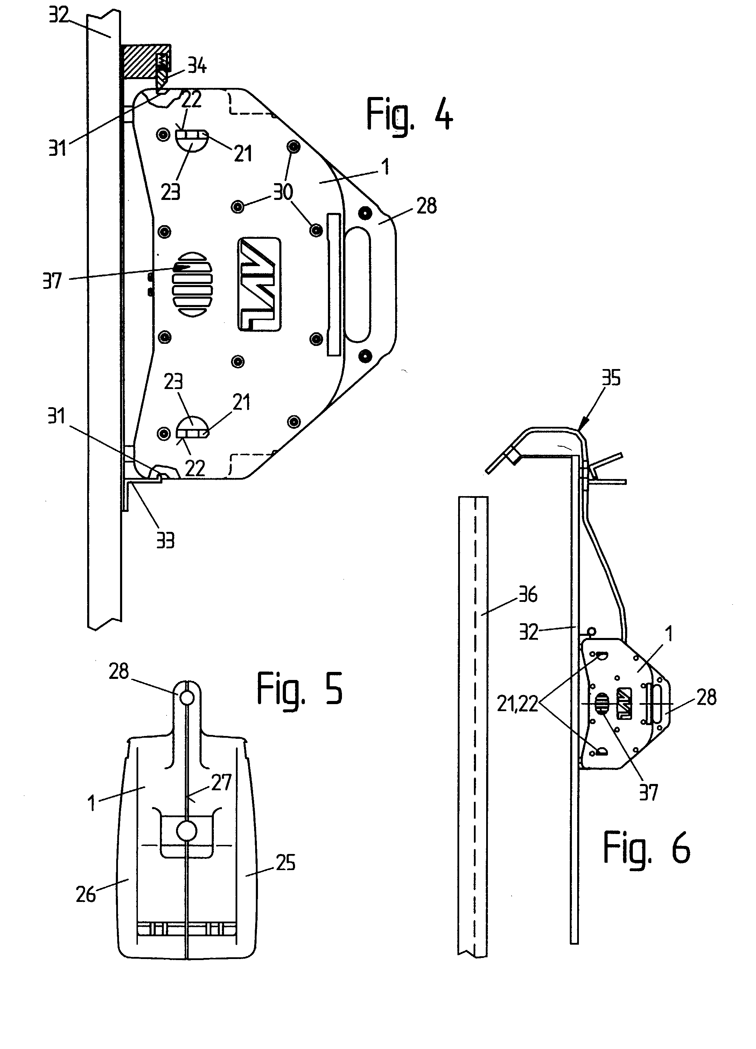

Die Erfindung wird im folgenden noch anhand der in der Zeichnung teilweise schematisch darstellten Ausführungsbeispiele näher erläutert. Fig. 1 zeigt dabei einen teilweisen Schnitt durch eine erfindungsgemäße Vorrichtung, Fig. 2 einen vergrößerten Detailschnitt entlang der Linie II-II in Fig. 1, Fig. 3 einen Rahmenteil samt Schutzfenster zur Verwendung in der Vorrichtung nach Fig. 1 bzw. 2 in anderem Maßstab, Fig. 4 die Vorrichtung nach Fig. 1 in verkleinertem Maßstab angekoppelt an einem stabförmigen Träger, Fig. 5 eine Seitenansicht der Vorrichtung beispielsweise gemäß Fig. 1 in kleinerem Maßstab und Fig. 6 die Vorrichtung beispielsweise entsprechend Fig. 4 angekoppelt an einem stabförmigen Träger vor dem Einhängen in ein hochgezogenes Auspuffrohr.

Die dargestellte Vorrichtung dient zur Trübungsmessung an partikelbeladenen Gasströmen, insbesonders etwa am Abgas einer Diese-Brennkraftmaschine, wie sie heutzutage zumeist vom Gesetzgeber im Rahmen der periodischen Überprüfung von als Antriebsmotor in Fahrzeugen dienenden Brennkraftmaschinen vorgeschrieben ist. Wie aus Fig. 1 ersichtlich, weist die Vorrichtung eine in einem Gehäuse 1 angeordnete, im wesentlichen rohrförmige Meßkammer 2 auf, in die in einem Mittenbereich 3 eine Zuführleitung 4 einmündet. Die Zuführleitung 4 steht an ihrer der Meßkammer 2 abgewandten Seite mit einem Umschaltventil 5 in Verbindung, welches zwei hier nicht ersichtliche Schaltstellungen aufweist. Einerseits kann eine Probenzuleitung 6, die an ihrem aus dem Gehäuse 1 ragenden Ende 7 mit einer Sondenleitung (siehe auch Fig. 6) verbindbar ist, über das Umschaltventil 5 mit der Zuführleitung 4 verbunden werden - andererseits kann in einer zweiten Schaltstellung die Probenzuleitung 6 dicht abgesperrt und die Zuführleitung 4 mit dem oberen Innenraum 8 des Gehäuses 1 verbunden werden, in welchen eine Gebläseeinheit 9 von in der Darstellung oben her Außenluft fördert, welche in diesem Falle über die Zuführleitung 4 den Innenraum der Meßkammer 2 zur Kalibrierung durchströmt.

Das über die Probenzuleitung 6 und die Zuführleitung 4 in die Meßkammer 2 zugeführte Abgas, bzw. die vom oberen Innenraum 8 des Gehäuses 1 her bei entsprechender Stellung des Umschaltventils 5 zugeführte Kalibrierluft, strömt vom Mittenbereich 3 der Meßkammer aus zu den beiden offenen Enden 10 der Meßkammer 2 hin ab, wird nach dem Austritt in topfförmigen Prallbereichen 11 im wesentlichen um 180° umgelenkt und strömt sodann aus dem gegenüber dem oberen Innenraum 8 abgeschlossenen unteren Innenraum 12 über Auslaßöffnungen 37 ins Freie. Die über die Gebläseeinheit 9 in den oberen Innenraum 8 des Gehäuses 1 geförderte Luft strömt - abgesehen vom bereits beschriebenen Weg zur Kalibrierung der Meßkammer 2 - über beidseitig vorgesehene Spülkanäle 13 an der Unterseite des Gehäuses 1 wieder ins Freie aus. Spiegelbildlich gegenüber dem Ende 7 der Probenzuleitung 6 ist ein Stutzen im Gehäuse für einen nicht dargestellten Stecker für ein Anschlußkabel zur Verbindung mit einer Auswertungseinheit vorgesehen.

Im Bereich links und rechts außerhalb der an den offenen Enden 10 der Meßkammer 2 vorgesehenen Prallbereiche 11 bzw. der anschließenden Spülkanäle 13 ist einerseits eine Beleuchtungsanordnung 14 und andererseits eine Sensoranordnung 15 vorgesehen, die ebenso wie die Meßkammer 2 samt Zuführleitung 4 und die jeweils Prallbereich 11 und Spülkanal 13 umfassenden Bauteile in starrer, gegenseitig festbleibender Relation im Gehäuse 1 festgelegt sind. Über Beleuchtungskörper 16 (beispielsweise LED's) wird von der Beleuchtungsanordnung 14 Licht ausgesandt, welches durch Öffnungen 17 in den den Spülkanal 13 begrenzenden bzw. unterteilenden Wänden entlang der Achse 18 die Meßkammer 2 durchsetzt und auf der gegenüberliegenden Seite - wiederum durch Öffnungen 17 - in die Sensoranordnung 15 eintritt und dort an einem Empfänger 19 (beispielsweise ein Fotowiderstand) registriert wird. Die relative Abschwächung der am Empfänger 19 registrierten Intensität durch partikelbeladenes Abgas in der Meßkammer 2 bezogen auf den abgasfreien bzw. von Kalibrierluft durchströmten Zustand der Meßkammer 2 wird in einen hier nicht dargestellten angeschlossenen Auswerteeinheit ausgewertet.

Beleuchtungsanordnung 14 und Sensoranordnung 15 sind abgesehen von den vorgeschalteten Spülluftkanälen 13 noch über reinigbare Schutzfenster 20 vor der Anlagerung von Partikeln geschützt, wobei diese Schutzfenster 20 zur Reinigung separat aus ihrer dargestellten, im Meßbetrieb gegebenen Position relativ zum Gehäuse 1 entfernbar ausgebildet sind. Zu diesem Zwecke sind hier die Schutzfenster 20 - wie insbesonders auch aus den Fig. 2 und 3 zu ersehen ist - jeweils mit einem Rahmenteil 21 in seitlich am Gehäuse 1 zugreifbare Einschubschlitze 22 abgedichtet und reproduzierbar einrastend eingesteckt. Für das Einrasten in einer entsprechenden Vertiefung 23 außen am Gehäuse 1 ist gemäß Fig. 2 bzw. 3 ein hakenartiger Fortsatz 24 am Rahmenteil 21 vorgesehen, der beispielsweise zusammen mit dem Rahmenteil 21 an einem gemeinsamen, vorzugsweise aus Kunststoff bestehenden Teil ausgebildet sein kann. Das Schutzfenster 20 besteht aus geeignetem für den Beleuchtungsstrahl durchlässigem Material, beispielsweise temperaturbeständigem, durchsichtigem Kunststoff oder auch geeignetem Glas, und kann im Rahmenteil 21 beispielsweise eingeklebt oder sonst auf geeignete Weise befestigt sein. Wie insbesonders aus Fig. 2 ersichtlich ist, kann der Rahmenteil 21 nach Auslösen der Hakensperre am Fortsatz 24 in der Darstellung nach unten aus dem Einschubschlitz 22 geschoben werden, wonach entweder der gesamte Bauteil oder auch nur das Schutzfenster 20 auf geeignete Weise gereinigt werden kann. Zu diesem Zweck muß in vorteilhafter Weise die sonstige Meßgeometrie (gegenseitige Relation von Beleuchtungsanordnung 14, Meßkammer 2 und Sensoranordnung 15) nicht geändert werden, sodaß für weitere Messungen keinerlei Nachjustierung oder Nachkalibrierung erforderlich ist.

Insbesonders aus Fig. 2 und 5 ist zu erkennen, daß das Gehäuse 1 im wesentlichen aus zwei, im Betrieb fest verbundenen Halbschalen 25, 26, beispielsweise aus temperatur- und chemikalienbeständigem Kunststoff, besteht, deren Teilungsebene 27 im wesentlichen in der durch die Achsen von Meßkammer 1 und Zuführleitung 4 (siehe Fig. 1) aufgespannten Mittelebene liegt, und welche, abgesehen von den entfernbaren Schutzfenstern 20 samt deren Rahmenteilen 21, im normalen Betrieb der Vorrichtung alle Einbauteile fest verbunden aufnehmen. Es ergibt sich damit ein sehr einfacher und kompakter Aufbau der Vorrichtung, welche in der dargestellten Ausführung an der der Meßkammer 2 abgewandten Oberseite weiters noch einen Handgriff 28 trägt, der in einer durchgehenden Ausnehmung 29 Platz für die Aufnahme der hier nicht dargestellten Probensonde hat. Insbesonders aus Fig. 1 sind noch einige angeformte, im wesentlichen zylindrische bzw. kegelige Ansätze 30 ersichtlich, durch die beispielsweise Schrauben zur Verbindung der beiden Halbschalen 25, 26 durchgehen können.

Aus Fig. 4 und 6 ist zu ersehen, daß das Gehäuse 1 seitliche Halteelemente 31 (hier ausgebildet als vertiefte Rast) zur Ankoppelung an einen im wesentlichen stabförmigen Träger aufweist, der seinerseits zur Befestigung des Gehäuses 1 entsprechende Hakenelemente 33 bzw. Schnappriegel 34 trägt. Mittels des stabförmigen Trägers 32 kann die angekoppelte Vorrichtung samt Standard-Entnahmesonde 35 (siehe Fig. 6) beispielsweise in ein im wesentlichen senkrecht nach oben ragendes Auspuffrohr 36 von LKW's, Autobussen, Baumaschinen oder dergleichen eingehängt werden, wobei bei einem derartigen Einsatz insbesonders vorteilhaft zum Tragen kommt, daß die Meßgeometrie (gegenseitige Anordnung von Beleuchtungsanordnung 14, Sensoranordnung 15 und Meßkammer 2) bei der beschriebenen Ausbildung sehr robust und im Betrieb unveränderlich ist.

## Patentansprüche

1. Vorrichtung zur Trübungsmessung an partikelbeladenen Gasströmen, insbesonders am Abgas einer Diesel-Brennkraftmaschine, mit einer in einem Gehäuse (1) angeordneten, im wesentlichen rohrförmigen Meßkammer (2), die in einem Mittenbereich (3) eine einmündende Zuführleitung (4) und im Bereich ihrer offenen Enden (10) einerseits eine Beleuchtungsanordnung (14) und andererseits eine Sensoranordnung (15) aufweist, die mittels Schutzfenstern (20) vor der Anlagerung von Partikeln geschützt sind, **dadurch gekennzeichnet**, daß Beleuchtungsanordnung (14) und Sensoranordnung (15) in starrer, festbleibender Relation zur Meßkammer (2) im Gehäuse (1) angeordnet sind und daß die Schutzfenster (20) zur Reinigung separat aus ihrer im Meßbetrieb gegebenen Position relativ zum Gehäuse (1) entfernbar ausgebildet sind.

2. Vorrichtung nach Anspruch 1, dadurch gekennzeichnet, daß die Schutzfenster (20) jeweils mit einem Rahmenteil (21) in seitlich am Gehäuse (1) zugreifbare Einschubschlitze (22) abgedichtet und reproduzierbar einrastend eingesteckt sind.

3. Vorrichtung nach Anspruch 1 oder 2, dadurch gekennzeichnet, daß das Gehäuse (1) im wesentlichen aus zwei, im Betrieb fest verbundenen Halbschalen (25, 26), vorzugsweise aus temperatur- und chemikalienbeständigem Kunststoff, besteht, deren Teilungsebene (27) im wesentlichen in der durch die Achsen von Meßkammer (2) und Zuführleitung (4) aufgespannten Mittelebene liegt, und welche abgesehen von den entfernbaren Schutzfenstern (20) samt deren Rahmenteilen (21), im normalen Betrieb der Vorrichtung alle Einbauteile fest verbunden aufnehmen.

4. Vorrichtung nach Anspruch 3, dadurch gekennzeichnet, daß das Gehäuse (1) seitliche Halteelemente (31) zur Ankoppelung an einen im wesentlichen stabförmigen Träger (32) aufweist, mittels welchem die Vorrichtung samt Standard-Entnahmesonde (35) in im wesentlichen senkrecht nach oben ragende Proben-Entnahmestellen, insbesonders hochgezogene Auspuffrohre (36) von LKW's, einhängbar ist.
